# EUROPEAN PATENT APPLICATION

(11) **EP 3 742 637 A1**
(43) Date of publication of application: **25.11.2020**
(21) Application number: 19738592.5
(22) Date of filing: 03.01.2019
(51) Int. Cl.: H04L 1/00

(54) **DATA TRANSMISSION METHOD AND APPARATUS AND STORAGE MEDIUM**

(30) Priority: 15.01.2018 CN 201810036182
(71) Applicant: Sanechips Technology Co., Ltd., Shenzhen, Guangdong 518055 (CN)
(72) Inventor: LIU, Qingkui, Shenzhen, Guangdong 518055 (CN); WANG, Youbao, Shenzhen, Guangdong 518055 (CN); WU, Bei, Shenzhen, Guangdong 518055 (CN); LIN, Haidu, Shenzhen, Guangdong 518055 (CN); PENG, Junjian, Shenzhen, Guangdong 518055 (CN)
(74) Representative: Aipex B.V.
(86) International application number: PCT/CN2019/070299
(87) International publication number: WO 2019/137296

(57) **Abstract**

Disclosed are a data transmission method and apparatus and a storage medium. The data transmission method may include: receiving from a sending port a data frame to be transmitted, and acquiring frame header information and first overhead information which are corresponding to the data frame to be transmitted; determining, according to a preset transmission indication, a first transmission mode corresponding to the data frame to be transmitted; performing corresponding processing on the frame header information and the first overhead information according to the first transmission mode to obtain data to be transmitted corresponding to the data frame to be transmitted; and sending a receiving interface the data to be transmitted.

## Description

### CROSS-REFERENCES TO RELATED APPLICATIONS

This application is based on and claims priority to a Chinese patent application No. 201810036182.6 filed on January 15, 2018, disclosure of which is incorporated herein by reference in its entirety.

### TECHNICAL FIELD

The present invention relates to the technical field of optical communications and, in particular, relates to a data transmission method and apparatus, and a storage medium.

### BACKGROUND

The fixed bandwidth Ethernet interface provides a single stream with fixed bandwidth. To meet the customer's different requirements for transmission speed, a new transmission technology, flexible Ethernet (FlexE), is proposed. The FlexE transmission includes three modes: a perceptual mode, a non-perceptual mode and a termination mode. For the perceptual mode, it is necessary to acquire an unavailable transmitted timeslot from a signal to be transmitted and discard the unavailable timeslot before transmission. For the non-perceptual mode, the signal to be transmitted is directly transmitted without being processed. For the termination mode, a data signal is parsed from the transmission signal, and transmitted.

In the related art, a FlexE frame transmission apparatus can merely transmit the transmission signal in the non-perceptual mode. When it is desired to transmit a FlexE frame in the perceptual mode or the termination mode, the FlexE frame transmission apparatus cannot complete the transmission, resulting in poor compatibility of FlexE frame transmission.

### SUMMARY

In view of the above, embodiments of the present invention provide a data transmission method and apparatus and a storage medium so as to improve the compatibility of FlexE frame transmission.

Embodiments of the present invention provide a data transmission method. The data transmission method includes the steps described below.

A data frame to be transmitted is received from a sending port, and frame header information and first overhead information which are corresponding to the data frame to be transmitted are acquired.

A first transmission mode corresponding to the data frame to be transmitted is determined according to a preset transmission indication.

Corresponding processing is performed on the frame header information and the first overhead information according to the first transmission mode to obtain data to be transmitted corresponding to the data frame to be transmitted.

The data to be transmitted is sent to a receiving interface.

In the above-mentioned method, the first transmission mode includes the termination mode. The step in which the corresponding processing is performed on the frame header information and the first overhead information according to the first transmission mode to obtain the data to be transmitted corresponding to the data frame to be transmitted includes the step described below.

When the first transmission mode is the termination mode, the frame header information and the first overhead information are deleted to obtain the data to be transmitted.

In the above-mentioned method, the first transmission mode includes the perceptual mode. The step in which the corresponding processing is performed on the frame header information and the first overhead information according to the first transmission mode to obtain the data to be transmitted corresponding to the data frame to be transmitted includes the steps described below.

When the first transmission mode is the perceptual mode, port information corresponding to the data frame to be transmitted is acquired from the first overhead information.

A valid timeslot corresponding to the data frame to be transmitted is determined according to the port information.

The valid timeslot is marked by using the first overhead information.

The data to be transmitted is determined, according to the marked valid timeslot, from the data frame to be transmitted.

In the above-mentioned method, before the data to be transmitted is sent to the receiving interface, the method includes the steps described below.

At least one transmission channel corresponding to the data frame to be transmitted is acquired.

The data to be transmitted is transmitted in the at least one transmission channel.

In the above-mentioned method, the step in which the data to be transmitted is transmitted in the at least one transmission channel includes the steps described below.

At least one first transmission block, at least one second transmission block, until at least one n-th transmission block which are corresponding to the at least one transmission channel are sequentially acquired. Each transmission channel of the at least one transmission channel includes n transmission blocks, and n is greater than 1.

In a sequence of the at least one first transmission block, the at least one second transmission block, until the at least one n-th transmission block, the data to be transmitted is sequentially added to the at least one transmission channel for transmission.

In the above-mentioned method, before the port information corresponding to a transmission channel group is acquired from the first overhead information, the method further includes the steps described below.

A first data format is acquired in the perceptual mode.

The first data format is extended to a second data format in the termination mode.

In the above-mentioned method, after the data to be transmitted is sent to the receiving port, the method further includes the steps described below.

The data to be transmitted is received from the receiving port, and the data to be transmitted is decapsulated according to the first transmission mode.

According to the first transmission mode, the decapsulated data to be transmitted, the frame header information and the first overhead information are combined into the data frame to be transmitted, and the data frame to be transmitted is sent to the sending port.

In the above-mentioned method, after the data to be transmitted is decapsulated and before the decapsulated data to be transmitted, the frame header information and the first overhead information are combined according to the first transmission mode into the data frame to be transmitted, the method further includes the step described below.

The decapsulated data to be transmitted is transmitted according to the first transmission mode.

In the above-mentioned method, the step in which decapsulated data to be transmitted is transmitted according to the first transmission mode includes the step described below.

When the first transmission mode is the termination mode, the decapsulated data to be transmitted is transmitted according to a preset frame length of the data frame to be transmitted.

In the above-mentioned method, the step in which decapsulated data to be transmitted is transmitted according to the first transmission mode includes the step described below.

When the first transmission mode is the perceptual mode, the decapsulated data to be transmitted is transmitted according to the valid timeslot in a transmission clock corresponding to a preset frame length.

In the above-mentioned method, after the data to be transmitted is decapsulated and before the decapsulated data to be transmitted is transmitted according to the first transmission mode, the method further includes the step described below.

In a sequence of at least one first transmission block, at least one second transmission block, until at least one n-th transmission block, the decapsulated data to be transmitted is added to the at least one transmission channel.

Embodiments of the present invention provide a data transmission apparatus. The data transmission apparatus includes a receiving module, an acquisition module which is connected to the receiving module, a processing module which is connected to the acquisition module and a determination module, and a sending module which is connected to the processing module.

The receiving module is configured to receive from a sending port a data frame to be transmitted and send the acquisition module the data frame to be transmitted.

The acquisition module is configured to acquire frame header information and first overhead information which are corresponding to the data frame to be transmitted, and send the frame header information and the first overhead information to the processing module.

The determination module is configured to determine, according to a preset transmission indication, a first transmission mode corresponding to the data frame to be transmitted, and send the first transmission mode to the processing module.

The processing module is configured to perform corresponding processing on the frame header information and the first overhead information according to the first transmission mode to obtain data to be transmitted corresponding to the data frame to be transmitted, and send the sending module the data to be transmitted.

The sending module is configured to send a receiving interface the data to be transmitted.

In the above-mentioned data transmission apparatus, the data transmission apparatus includes a timeslot crossing module which is connected to the processing module and the sending module.

The timeslot crossing module is configured to acquire at least one transmission channel corresponding to the data frame to be transmitted and transmit the data to be transmitted in the at least one transmission channel.

In the above-mentioned data transmission apparatus, the processing module includes a deframing module.

The deframing module is configured to delete the frame header information and the first overhead information to obtain the data to be transmitted and send the timeslot crossing module the data to be transmitted when the first transmission mode is a termination mode.

In the above-mentioned data transmission apparatus, the processing module further includes a padding-block-insertion processing module.

The padding-block-insertion processing module is configured to: when the first transmission mode is a perceptual mode, acquire port information corresponding to the data frame to be transmitted from the first overhead information; determine, according to the port information, a valid timeslot corresponding to the data frame to be transmitted; mark the valid timeslot by using the first overhead information; and according to the marked valid timeslot, determine from the data frame to be transmitted the data to be transmitted, and send the timeslot crossing module the data to be transmitted.

In the above-mentioned data transmission apparatus, the timeslot crossing module is configured to sequentially acquire at least one first transmission block, at least one second transmission block, until at least one n-th transmission blocks which are corresponding to the at least one transmission channel, where each transmission channel of the at least one transmission channel includes n transmission blocks, and n is greater than 1; and in a sequence of the at least one first transmission block, the at least one second transmission block, until the at least one n-th transmission block, sequentially add the data to be transmitted to the at least one transmission channel for transmission, and after the transmission of the data to be transmitted is completed, send the sending module the data to be transmitted.

In the above-mentioned data transmission apparatus, the padding-block-insertion processing module is further configured to acquire a first data format in the perceptual mode and extend the first data format to a second data format in the termination mode.

In the above-mentioned data transmission apparatus, the data transmission apparatus further includes a decapsulation module which is connected to the receiving module and a composition module which is connected to the decapsulation module.

The receiving module is further configured to receive from the receiving port the data to be transmitted and send the decapsulation module the data to be transmitted.

The decapsulation module is configured to decapsulate, according to the first transmission mode, the data to be transmitted and send the composition module the data to be transmitted.

The composition module is configured to combine, according to the first transmission mode, the decapsulated data to be transmitted, the frame header information and the first overhead information into the data frame to be transmitted, and send the sending module the data frame to be transmitted.The sending module is further configured to send the sending port the data frame to be transmitted.

In the above-mentioned data transmission apparatus, the data transmission apparatus further includes an anti-timeslot-crossing module which is connected to the decapsulation module and the composition module.

The anti-timeslot-crossing module is configured to transmit, according to the first transmission mode, the decapsulated data to be transmitted, and after the transmission of the data to be transmitted is completed, send the composition module the data to be transmitted.

In the above-mentioned data transmission apparatus, the anti-timeslot-crossing module is configured to: when the first transmission mode is the termination mode, transmit, according to a preset frame length of the data frame to be transmitted, the decapsulated data to be transmitted.In the above-mentioned data transmission apparatus, the anti-timeslot-crossing module is further configured to: when the first transmission mode is the perceptual mode, transmit, according to the valid timeslot in a transmission clock corresponding to the preset frame length, the decapsulated data to be transmitted.

In the above-mentioned data transmission apparatus, the data transmission apparatus further includes a data adapter module which is connected to the decapsulation module and the anti-timeslot-crossing module.

The data adapter module is configured to receive the decapsulated data to be transmitted sent by the decapsulation module, and in a sequence of at least one first transmission block, at least one second transmission block, until at least one n-th transmission, add the decapsulated data to be transmitted to the at least one transmission channel and after the addition of the data to be transmitted is completed, send the anti-timeslot-crossing module the data to be transmitted.

Embodiments of the present invention further provide a data transmission apparatus. The data transmission apparatus includes a memory and a processor. The memory is configured to store a program for data transmission.

The processor is configured to execute the program which, when executed, performs the data transmission methods according to embodiments of the present invention.

Embodiments of the present invention provide a storage medium, which is configured to store a computer program and applied to a data transmission apparatus. The computer program, when executed by a processor, performs the data transmission methods according to embodiments of the present invention.

In the data transmission method and apparatus and the storage medium according to embodiments of the present invention, a data frame to be transmitted is received from a sending port, and frame header information and first overhead information which are corresponding to the data frame to be transmitted are acquired; according to a preset transmission indication, a first transmission mode corresponding to the data frame to be transmitted is determined, and according to the first transmission mode, corresponding processing is performed on the frame header information and the first overhead information to obtain data to be transmitted corresponding to the data frame to be transmitted; the data to be transmitted is sent to a receiving interface. With the above-mentioned method, after a data transmission apparatus receives from the sending port the data frame to be transmitted, the frame header information and the first overhead information which are corresponding to the data frame to be transmitted are acquired, then a transmission mode corresponding to the data frame to be transmitted is determined, different processing is performed on the frame header information and the first overhead information according to the transmission mode to obtain the data to be transmitted, and the data transmission apparatus transmits the data to be transmitted through transmitting the data to be transmitted. Therefore, the data transmission apparatus can simultaneously transmit the data to be transmitted in different transmission modes, improving the compatibility of FlexE frame transmission.

### BRIEF DESCRIPTION OF DRAWINGS

FIG. 1 is flowchart one of a data transmission method according to embodiments of the present invention;
FIG. 2 is a schematic structural view of an exemplary data receiving apparatus according to embodiments of the present invention;
FIG. 3 is a schematic diagram of an exemplary frame structure according to embodiments of the present invention;
FIG. 4 is an exemplary overhead data format according to embodiments of the present invention;
FIG. 5 is a schematic diagram of exemplary conversion of a data transmission frame structure according to embodiments of the present invention;
FIG. 6 is flowchart two of a data transmission method according to embodiments of the present invention;
FIG. 7 is a schematic structural view of an exemplary data sending apparatus according to embodiments of the present invention;
FIG. 8 is flowchart three of a data transmission method according to embodiments of the present invention;
FIG. 9 is schematic structural view one of a data transmission apparatus according to embodiments of the present invention;
FIG. 10 is schematic structural view two of a data transmission apparatus according to embodiments of the present invention;
FIG. 11 is schematic structural view three of a data transmission apparatus according to embodiments of the present invention;
FIG. 12 is schematic structural view four of a data transmission apparatus according to embodiments of the present invention;
FIG. 13 is schematic structural view five of a data transmission apparatus according to embodiments of the present invention;
FIG. 14 is schematic structural view six of a data transmission apparatus according to embodiments of the present invention; and
FIG. 15 is schematic structural view seven of a data transmission apparatus according to embodiments of the present invention.

### DETAILED DESCRIPTION

Technical solutions in embodiments of the present invention are described clearly and completely in conjunction with the drawings in embodiments of the present invention.

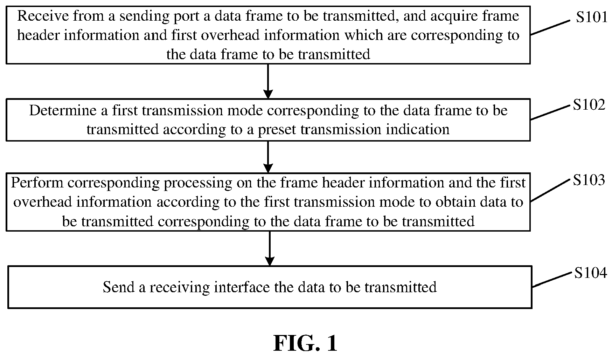

Embodiments of the present invention provide a data transmission method. As shown in FIG. 1, the method may include the steps described below.

In step S101, a data frame to be transmitted is received from a sending port, and frame header information and first overhead information which are corresponding to the data frame to be transmitted are acquired.

The data transmission method according to embodiments of the present invention is applicable to a scenario where a FlexE frame is transmitted over an optical transport network (OTN).

In embodiments of the present invention, a data transmission apparatus includes a data receiving apparatus and a data sending apparatus. The data receiving apparatus is configured to acquire a FlexE frame (data frame to be transmitted) from a sending port, and transmit the FlexE frame over the OTN.

In embodiments of the present invention, the FlexE frame is transmitted through n physical layer interfaces (PHYs).

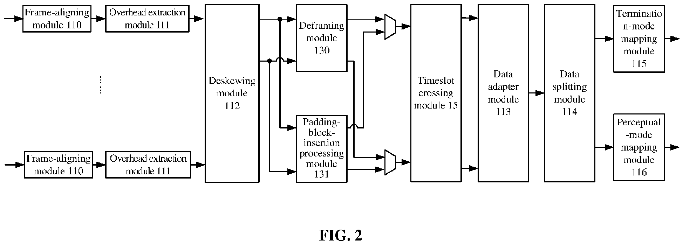

In embodiments of the present invention, as shown in FIG. 2, a data receiving apparatus includes a flexe_rx-align module (frame-aligning module 110), a flexe_rx_oh module (overhead extraction module 111), a flexe_rx_deskew module (deskewing module 112), a flexe_tmn_deframe module (deframing module 130), a flexe_aware_pad_add module (padding-block-insertion processing module 131), a flexe_rx_ts_corss module (timeslot crossing module 15), a flexe_rx_adapter module (data adapter module 113), a flexe_rx_dat_spt module (data splitting module 114), a flexe_imp module (termination-mode mapping module 115), and a flexe_bgmp module (perceptual-mode mapping module 116).

In embodiments of the present invention, the data receiving apparatus receives a FlexE frame from a sending interface, the flexe_rx-align module searches a frame header and an overhead indication signal according to a fixed FlexE frame interval, and the flexe_rx_oh module extracts information in an overhead control field according to the overhead indication signal and identifies signals such as GROUP (a transmission channel group), PHY MAP, PHY Number and Client Calendar.

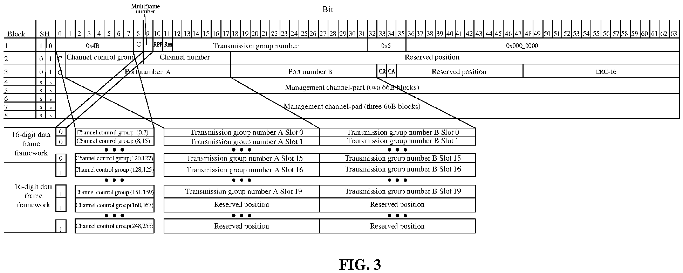

Exemplarily, a schematic structural view of an overhead structure of a FlexE frame is shown in FIG. 3. The overhead structure of the FlexE frame includes data of 8 overhead positions, which are used for marking information such as frame header information, transmission group information, a transmission channel reference number, transmission channel usage, and a port number. C is calender configuration in use, RPF is remove PHY fault, CR is calendar switch request, CA is calendar switch acknowledge, and s is valid sync header bits.

In embodiments of the present invention, n PHYs exist, and then n flexe rx-align modules and n flexe_rx_oh modules exist.

In step S102, a first transmission mode corresponding to the data frame to be transmitted is determined according to a preset transmission indication.

After the data receiving apparatus acquires the frame header information and the first overhead information which are corresponding to the data frame to be transmitted, the data receiving apparatus determines the first transmission mode corresponding to the data frame to be transmitted according to the preset transmission indication.

In embodiments of the present invention, the first transmission mode includes the perceptual mode and the termination mode. The flexe_tmn_deframe module processes frame header information and first overhead information in the termination mode, and the flexe_aware_pad_add module processes first overhead information in the perceptual mode. At the beginning of transmission of FlexE, a central processing unit (CPU) configures a designated transmission mode for each GROUP and informs the flexe_tmn_deframe module and the flexe_aware_pad_add module of the GROUP required to be processed. After the GROUP is received by the flexe_tmn_deframe module and the flexe_aware_pad_add module, the GROUP is matched with a GROUP number stored in the flexe_tmn_deframe module and the flexe_aware_pad_add module. When the matching is successful, corresponding processing is performed on the received GROUP.

In step S103, corresponding processing is performed on frame header information and first overhead information according to the first transmission mode to obtain data to be transmitted corresponding to the data frame to be transmitted.

When the data receiving apparatus determines the first transmission mode, the data receiving apparatus performs different processing on the frame header information and the first overhead information according to the first transmission mode to obtain the data to be transmitted.

In embodiments of the present invention, when the first transmission mode is the termination mode, the data to be transmitted is payload data; and when the first transmission mode is the perceptual mode, the data to be transmitted is port information and payload data.

In embodiments of the present invention, when the first transmission mode is the termination mode, the flexe_tmn_deframe module deletes frame header information and first overhead information, and reserves payload data.

In embodiments of the present invention, n PHYs exist, and then n flexe_tmn_deframe modules exi st.

In embodiments of the present invention, when the first transmission mode is the termination mode, the port information and the payload data are transmitted together. The port information is obtained by identifying the Client Calendar. Each timeslot corresponds to one Client Calendar, and then each timeslot corresponds to one port.

In embodiments of the present invention, when the first transmission mode is the perceptual mode, to extend a first data format output in the perceptual mode to be the same as a second data format output in the termination mode, the flexe_aware_pad_add module extends an overhead position of a first transmission channel for carrying the data to be transmitted from one 66B block to twenty 66B blocks, then identifies positions and the number of valid timeslots of the first transmission channel according to Client Calendar information, sets data valid indication information to 1 to indicate that the data is valid, inserts a pad (cache data block) at the overhead position at the same time, where the number of pads is determined by the total number of valid timeslots of a PHY bound to a GROUP, and then moves overheads of other PHYs required to be bound to the present PHY according to the format of the valid timeslot of the first transmission channel.

In embodiments of the present invention, an inserted pad block is an Ethernet Error block.

In embodiments of the present invention, n PHYs exist, and then n flexe_aware_pad_add modules exist.

In embodiments of the present invention, when the first transmission mode is the perceptual mode, port information and data are transmitted together. The port information is a GROUP number corresponding to a plurality of bound PHYs, and is obtained through configurating by a user. Each PHY transmits one port.

In embodiments of the present invention, when the perceptual mode and the termination mode exist at the same time, the port transmitted in the termination mode and the port transmitted in the perceptual mode cannot have a same value.

Exemplarily, PHY0, PHY2, and PHY4 are bound, and the numbers of valid timeslots are 2, 1, and 9, respectively, and then PHY0 has 2 valid data in twenty 66B blocks extended at an overhead position, and the 2 valid data are overheads of PHY0 and PHY2; PHY1 has 1 valid data in twenty 66B blocks extended at an overhead position, and the 1 valid data is an overhead of PHY4; PHY4 has 9 valid data in twenty 66B blocks extended at an overhead position, where all of the 9 valid data are padded with pads, and movement of overhead data is completed.

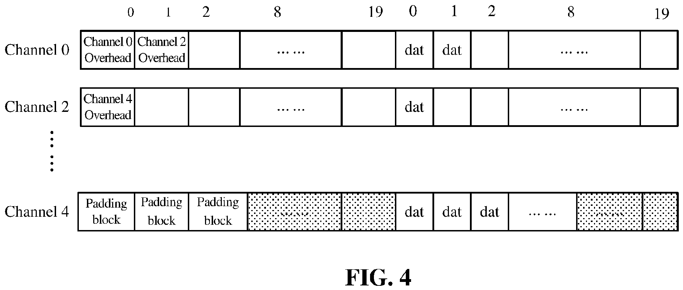

Exemplarily, as shown in FIG. 4, a format of the overhead data subjected to interleaving is as follows: two overheads of OH0 and OH2 are padded at position 0 and position 1 on PHY0, an overhead of OH4 is padded at position 0 on PHY2, and 9 pads are padded on PHY 4.

In some embodiments, before corresponding processing is performed on frame header information and first overhead information according to the first transmission mode, the flexe_rxdeskew module performs deskewing between PHYs of a same GROUP, and the PHYs are rearranged from small to large according to PHY Numbers.

In step S104, the data to be transmitted is sent to a receiving interface.

When the data receiving apparatus performs corresponding processing on frame header information and first overhead information according to the first transmission mode to obtain the data to be transmitted, the data receiving apparatus sends the receiving interface the data to be transmitted.

In embodiments of the present invention, the data to be transmitted is transmitted in at least one transmission channel in a GROUP, and as for a transmission sequence, the data to be transmitted in the at least one transmission channel is transmitted sequentially according to an arrangement sequence. The flexer_x_ts_corss module modifies the transmission sequence to a transmission sequence as follows: data in first blocks in the at least one transmission channel is transmitted sequentially, then data in second blocks in the at least one transmission channel is transmitted sequentially, and so on so that, transmission of the data to be transmitted in a transmission channel group is performed.

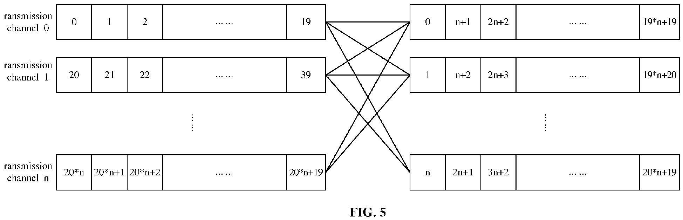

Exemplarily, as shown in FIG. 5, a transverse transmission is that PHY0 is transmitted first, and then PHY1 is transmitted until data in PHYn is transmitted; a longitudinal transmission is that data in first blocks in PHY0 to PHYn is transmitted first, and data in second blocks in PHY0 to PHYn is transmitted until data in 20th blocks in PHY0 to PHYn is transmitted.

In embodiments of the present invention, the flexe_rx_adapter module selects data to be transmitted with a same port according to a sending port number corresponding to a valid timeslot, and then performs data splicing. The spliced data to be transmitted are combined into one path of time-divisional data.

In embodiments of the present invention, the flexe_rx_dat spt module splits ports of the perceptual mode and the termination mode into two paths for output according to a GROUP. As for the termination mode, the flexe imp module performs data scrambling, IDLE deletion and insertion and time-divisional mapping on the time-divisional data. As for the perceptual mode, the flexe_bgmp module performs data scrambling and time-divisional mapping on the time-divisional data.

It can be understood that after a data transmission apparatus receives from a sending port a data frame to be transmitted, frame header information and first overhead information which are corresponding to the data frame to be transmitted are acquired, then a transmission mode corresponding to the data frame to be transmitted is determined, different processing is performed on the frame header information and the first overhead information according to the transmission mode to obtain data to be transmitted, and the data transmission apparatus transmits the data frame to be transmitted through transmission of the data to be transmitted. Therefore, the data transmission apparatus can simultaneously transmit the data to be transmitted in different transmission modes, improving the compatibility of FlexE frame transmission.

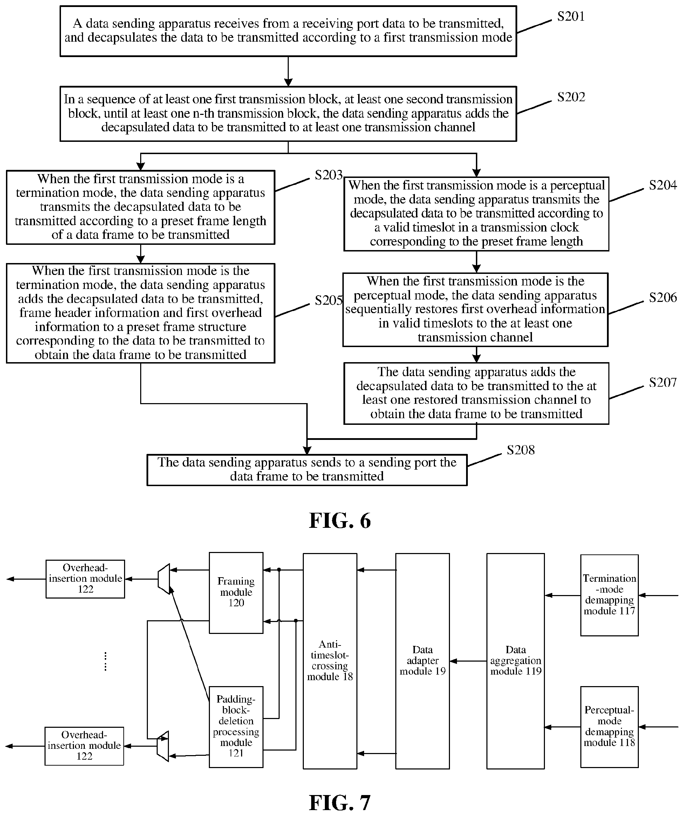

In some embodiments, embodiments of the present invention provide a data transmission method applied to a data sending apparatus. As shown in FIG. 6, the method may include the steps described below.

In step S201, a data sending apparatus receives from a receiving port data to be transmitted, and decapsulates the data to be transmitted according to a first transmission mode.

The data transmission method according to embodiments of the present invention is applicable to a scenario where a FlexE frame is transmitted over an OTN.

In embodiments of the present invention, a data transmission apparatus includes a data receiving apparatus and a data sending apparatus. The data sending apparatus is used for acquiring from a receiving port data to be transmitted and converting the data to be transmitted into a FlexE frame.

In embodiments of the present invention, as shown in FIG. 7, the data sending apparatus includes a flexe_de_imp module (termination-mode demapping module 117), a flexe_de_bgmp module (perceptual-mode demapping module 118), a flexe_tx_dat_mrg module (data aggregation module 119), a flexe_tx_adapter module (data adapter module 19), a flexe_tx_ts_corss module (anti-timeslot-crossing module 18), a flexe_tmn_frame module (framing module 120), a flexe_aware_pad_del module (padding-block-deletion processing module 121), and a flexe_tx_oh module (overhead-insertion module 122).

In embodiments of the present invention, the data sending apparatus acquires from the receiving port the data to be transmitted. When the data to be transmitted is in the termination mode, the flexe_de_imp module performs time-divisional demapping, IDLE deletion and insertion, and data descrambling on the data to be transmitted. When the data to be transmitted is in the perceptual mode, the flexe_de_bgmp module performs time-divisional demapping, frame aligning and data descrambling on encapsulated data to be transmitted.

In step S202, in a sequence of at least one first transmission block, at least one second transmission block, until at least one n-th transmission block, the data sending apparatus adds decapsulated data to be transmitted to at least one transmission channel.

After the data sending apparatus decapsulates the data to be transmitted, the data sending apparatus adds the decapsulated data to be transmitted to the at least one transmission channel in the sequence of the at least one first transmission block, the at least one second transmission block, until the at least one n-th transmission block.

In embodiments of the present invention, the flexe_tx_dat_mrg module combines split data to be transmitted in the perceptual mode and the termination mode into one path of time-divisional data. The flexe_tx_adapter module stores the time-divisional data in a cache according to ports, and performing a reading operation on the data in the cache according to timeslot ports of the flexe_tx_ts_corss.

In embodiments of the present invention, the flexe_tx_ts_corss module modifies a transmission sequence of the read data from longitudinal transmission to transverse transmission, with a same principle as the flexe_rx_ts_corss, but crossing sequences are opposite to each other.

In step S203, when the first transmission mode is the termination mode, the data sending apparatus transmits the decapsulated data to be transmitted according to a preset frame length of a data frame to be transmitted.

After the data sending apparatus decapsulates encapsulated data to be transmitted according to the first transmission mode, the data sending apparatus transmits the decapsulated data to be transmitted in a transmission channel group according to the first transmission mode. In some embodiments, when the first transmission mode is the termination mode, the data sending apparatus transmits the decapsulated data to be transmitted according to the preset frame length of the data frame to be transmitted.

In embodiments of the present invention, when the first transmission mode is the termination mode decapsulated data to be transmitted in read enable and read port is sent according to a frame structure of the flexe_tmn_frame module itself and by twenty 66B.

In step S204, when the first transmission mode is the perceptual mode, the data sending apparatus transmits the decapsulated data to be transmitted according to a valid timeslot in a transmission clock corresponding to a preset frame length.

When the first transmission mode is the perceptual mode, the data sending apparatus transmits the decapsulated data to be transmitted according to the valid timeslot in the transmission clock corresponding to the preset frame length.

In embodiments of the present invention, when the first transmission mode is the perceptual mode, the flexe_tx_ts_corss module sends decapsulated data to be transmitted in read enable and read port according to the total number of valid timeslots in every 20 clocks.

Step S203 and step S204 are two parallel steps after step S202.

In step S205, when the first transmission mode is the termination mode, the data sending apparatus adds the decapsulated data to be transmitted, the frame header information and the first overhead information to a preset frame structure corresponding to the data frame to be transmitted to obtain the data frame to be transmitted.

After the data sending apparatus transmits the decapsulated data to be transmitted in a transmission channel group according to the first transmission mode, the data sending apparatus combines the decapsulated data to be transmitted, the frame header information and the first overhead information into the data frame to be transmitted according to the first transmission mode. In some embodiments, when the first transmission mode is the termination mode, the data sending apparatus adds the decapsulated data to be transmitted, the frame header information and the first overhead information to the preset frame structure corresponding to the data to be transmitted to obtain the data frame to be transmitted.

In embodiments of the present invention, when the first transmission mode is the termination mode, the flexe_tmn_frame module adds FlexE frame header and overhead to form the FlexE frame for output.

In embodiments of the present invention, n PHYs exist, and then n flexe_tmn_frame modules exi st.

In step S206, when the first transmission mode is the perceptual mode, the data sending apparatus sequentially restores first overhead information in valid timeslots to at least one transmission channel.

When the first transmission mode is the perceptual mode, the data sending apparatus acquires the first overhead information from the valid timeslots, and sequentially restores the first overhead information to the at least one transmission channel.

In embodiments of the present invention, when the first transmission mode is the perceptual mode, the flexe_aware_pad_del module deletes a read pad and restores overhead data of a PHY bound to the transmission channel group to a corresponding position of the bound PHY.

In embodiments of the present invention, n PHYs exist, and then n flexe_aware_pad_del modules exist.

In step S207, the data sending apparatus adds the decapsulated data to be transmitted to at least one restored transmission channel to obtain a data frame to be transmitted.

After the data sending apparatus sequentially restores first overhead information to at least one transmission channel, the data sending apparatus adds the decapsulated data to be transmitted to the at least one restored transmission channel to obtain the data frame to be transmitted.

In embodiments of the present invention, the data sending apparatus adds the decapsulated data to be transmitted to a first transmission channel carrying a data frame to be transmitted in at least one restored transmission channel. The flexe_tx_oh module inserts corresponding overhead data at an overhead position to obtain the data frame to be transmitted.

Steps S206 to S207 and step S205 are respectively two parallel steps after step S204 and step S203.

In step S208, the data sending apparatus sends a sending port the data frame to be transmitted.

After the data sending apparatus combines the decapsulated data to be transmitted, the frame header information and the first overhead information into the data frame to be transmitted, the data sending apparatus sends the sending port the data frame to be transmitted.

In embodiments of the present invention, the data sending apparatus sends the sending port the data frame to be transmitted.

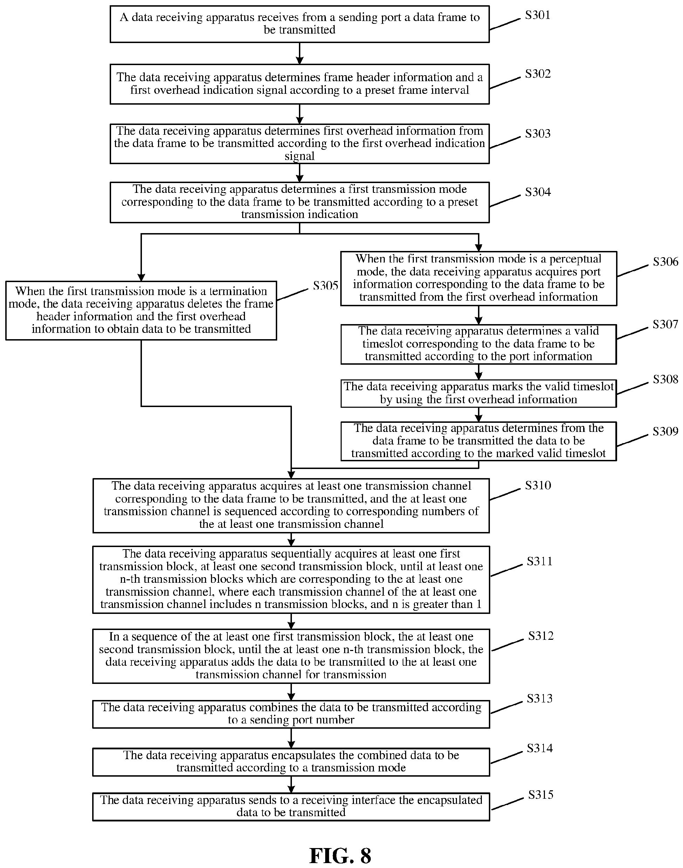

It can be understood that after the data sending apparatus receives from a receiving port encapsulated data to be transmitted, the data sending apparatus transmits the encapsulated data to be transmitted according to a first transmission mode. Then, the data sending apparatus combines the decapsulated data to be transmitted, frame header information and first overhead information into a data frame to be transmitted, and sends a sending interface the data frame to be transmitted. Therefore, the data sending apparatus can simultaneously transmit the encapsulated data to be transmitted in different transmission modes, improving the compatibility of FlexE frame transmissionIn some embodiments, embodiments of the present invention provide a data transmission method applied to a data receiving apparatus. As shown in FIG. 8, the method may include the steps described below.

In step S301, a data receiving apparatus receives from a sending port a data frame to be transmitted.

The data transmission method according to embodiments of the present invention is applicable to a scenario where a FlexE frame is transmitted over an OTN.

In embodiments of the present invention, the data receiving apparatus is used for acquiring a FlexE frame (data frame to be transmitted) from the sending port.

In embodiments of the present invention, as shown in FIG. 2, the data receiving apparatus includes a flexe_rx-align module, a flexe_rx_oh module, a flexe_rx_deskew module, a flexe_tmn_deframe module, a flexe_aware_pad_add module, a flexe_rx_ts_corss module, a flexe_rx_adapter module, a flexe_rx_dat spt module, a flexe_imp module, and a flexe_bgmp module.

In embodiments of the present invention, the data receiving apparatus receives from the sending port the data frame to be transmitted.

In step S302, the data receiving apparatus determines frame header information and a first overhead indication signal according to a preset frame interval.

After the data receiving apparatus receives from the sending port the data frame to be transmitted, the data receiving apparatus determines the frame header information and the first overhead indication signal according to the preset frame interval.

In embodiments of the present invention, the flexe _rx-align module searches for a frame header and an overhead indication signal according to a fixed FlexE frame interval.

In embodiments of the present invention, n PHYs exist, and then n flexe _rx-align modules exist.

In step S303, the data receiving apparatus determines first overhead information from the data frame to be transmitted according to the first overhead indication signal.

After the data receiving apparatus determines the frame header information and the first overhead indication signal, the data receiving apparatus determines the first overhead information from the data frame to be transmitted according to the first overhead indication signal.

In embodiments of the present invention, the flexe_rx_oh module extracts information in an overhead control field according to the overhead indication signal, and identifies signals such as GROUP (transmission channel group), PHY MAP, PHY Number and Client Calendar.

In embodiments of the present invention, n PHYs exist, and then n flexe_rx_oh modules exist.

In step S304, the data receiving apparatus determines a first transmission mode corresponding to the data frame to be transmitted according to a preset transmission indication.

After the data receiving apparatus determines the first overhead information, the data receiving apparatus performs different processing on the first overhead information according to different transmission modes. First, the data receiving apparatus determines the first transmission mode corresponding to the data frame to be transmitted according to the preset transmission indication.

In embodiments of the present invention, the first transmission mode includes a perceptual mode and a termination mode.

In embodiments of the present invention, at the beginning of transmission of FlexE, a CPU configures a designated transmission mode for each GROUP and informs the flexe_tmn_deframe module and the flexe_aware_pad_add module of the GROUP required to be processed. After the GROUP is received by the flexe_tmn_deframe module and the flexe_aware_pad_add module, the GROUP is matched with a GROUP number stored in the flexe_tmn_deframe module and the flexe_aware_pad_add module. When the matching is successful, corresponding processing is performed on the received GROUP.

In step S305, when the first transmission mode is the termination mode, the data receiving apparatus deletes the frame header information and the first overhead information to obtain data to be transmitted.

When the data receiving apparatus determines that the first transmission mode is the termination mode, the data receiving apparatus deletes the frame header information and the first overhead information to obtain the data to be transmitted.

In embodiments of the present invention, when the first transmission mode is the termination mode, the flexe_tmn_deframe module deletes the frame header information and the first overhead information, and reserves the data to be transmitted.

In embodiments of the present invention, n PHYs exist, and then n flexe_tmn_deframe modules exi st.

In step S306, when the first transmission mode is the perceptual mode, the data receiving apparatus acquires port information corresponding to the data frame to be transmitted from the first overhead information.

When the data receiving apparatus determines that the first transmission mode is the perceptual mode, the data receiving apparatus acquires the port information corresponding to the data frame to be transmitted from the first overhead information.

In embodiments of the present invention, when the first transmission mode is the perceptual mode, to extend a first data format output in the perceptual mode to be the same as a second data format output in the termination mode, the flexe_aware_pad_add module extends an overhead position of a first transmission channel carrying data to be transmitted from one 66B block to twenty 66B blocks, and then acquires the port information corresponding to the data frame to be transmitted according to Client Calendar information.

In step S307, the data receiving apparatus determines a valid timeslot corresponding to the data frame to be transmitted according to the port information.

After the data receiving apparatus determines the port information, the data receiving apparatus determines the valid timeslot corresponding to the data frame to be transmitted according to the port information.

In embodiments of the present invention, the data receiving apparatus identifies positions and the number of valid timeslots of the first transmission channel according to the Client Calendar information, sets data valid indication information to 1 to indicate that the data is valid, and inserts a pad (cache data block) at an overhead position at the same time, where the number of pads is determined by the total number of valid timeslots of PHYs bound to a GROUP.

In step S308, the data receiving apparatus marks the valid timeslot by using the first overhead information.

After the data receiving apparatus determines the valid timeslot, the data receiving apparatus marks the valid timeslot by using the first overhead information.

In embodiments of the present invention, the flexe_aware_pad_add module moves overheads of other PHYs required to be bound to the present PHY according to the format of the valid timeslot of the first transmission channel.

In embodiments of the present invention, n PHYs exist, and then n flexe_aware_pad_add modules exist.

Exemplarily, PHY0, PHY2, and PHY4 are bound, and the numbers of valid timeslots is 2, 1, and 9, respectively, and then PHY0 has 2 valid data in twenty 66B blocks extended at an overhead position, and the 2 valid data are overheads of PHY0 and PHY2; PHY1 has 1 valid data in twenty 66B blocks extended at an overhead position, and the 1 valid data is an overhead of PHY4; PHY4 has 9 valid data in twenty 66B blocks extended at an overhead position, where all of the 9 valid data are filled with pads, and movement of overhead data is completed.

In step S309, the data receiving apparatus determines from the data frame to be transmitted the data to be transmitted according to the marked valid timeslot.

After the data receiving apparatus marks the valid timeslot by using the first overhead information, the data receiving apparatus determines from the data frame to be transmitted the data to be transmitted according to the marked valid timeslot.

In embodiments of the present invention, the flexe_rx_ts_corss module determines from the data frame to be transmitted the data to be transmitted according to the marked valid timeslot.

Steps S306 to S309 and step S305 are two parallel steps after step S304, which can be selectively performed according to actual conditions, which is not specifically limited in embodiments of the present invention.

In step S310, the data receiving apparatus acquires at least one transmission channel corresponding to the data frame to be transmitted, and the at least one transmission channel is sequenced according to corresponding numbers of the at least one transmission channel.

After the data receiving apparatus performs corresponding processing on first overhead information and frame header information according to the first transmission mode, the data receiving apparatus acquires the at least one transmission channel corresponding to the data frame to be transmitted.

In embodiments of the present invention, before corresponding processing is performed on the frame header information and the first overhead information according to the first transmission mode, the flexe_rx_deskew module performs deskewing between PHYs of a same GROUP, and the PHYs are rearranged from small to large according to PHY Numbers.

In embodiments of the present invention, the data receiving apparatus acquires the at least one transmission channel corresponding to the data frame to be transmitted.

In step S311, the data receiving apparatus sequentially acquires at least one first transmission block, at least one second transmission block, until at least one n-th transmission block which are corresponding to the at least one transmission channel. Each transmission channel of the at least one transmission channel includes n transmission blocks, and n is greater than 1.

After the data receiving apparatus acquires the at least one transmission channel corresponding to the data frame to be transmitted, the data receiving apparatus sequentially acquires the at least one first transmission block, the at least one second transmission block, until the at least one n-th transmission block which are corresponding to the at least one transmission channel.

In embodiments of the present invention, each transmission channel of the at least one transmission channel corresponding to the data frame to be transmitted includes n transmission blocks, and the data receiving apparatus sequentially acquires the at least one first transmission block, the at least one second transmission block, until the at least one n-th transmission block which are corresponding to the at least one transmission channel.

In step S312, in a sequence of the at least one first transmission block, the at least one second transmission block, until the at least one n-th transmission block, the data receiving apparatus adds the data to be transmitted to the at least one transmission channel for transmission.

After the data receiving apparatus determines the sequence of the at least one first transmission block, the at least one second transmission block, until the at least one n-th transmission block, the data receiving apparatus sequentially adds the data to be transmitted to the at least one transmission channel for transmission in the sequence of the at least one first transmission block, the at least one second transmission block, until the at least one n-th transmission block.

In embodiments of the present invention, in a sequence of the at least one first transmission block, at least one second transmission block, until at least one nth transmission block, the flexe_rx_ts_corss module adds the data to be transmitted to the at least one transmission channel for transmission.

In embodiments of the present invention, a previous transmission sequence of the data frame to be transmitted is as follows: transmission of a transmission channel is finished and then transmission of a next transmission channel is performed, which is referred to as a transverse transmission, and the flexe_rx_ts_corss module converts the transverse transmission into a longitudinal transmission.

Exemplarily, as shown in FIG. 3, the transverse transmission is as follows: PHY0 is transmitted first, and then PHY1 is transmitted until data in PHYn is transmitted; the longitudinal transmission is as follows: data in first blocks in PHY0 to PHYn is transmitted first, and data in second blocks in PHY0 to PHYn is transmitted until data in 20th blocks in PHY0 to PHYn is transmitted.

It can be understood that converting a transmission direction of the data to be transmitted from the transverse transmission to the longitudinal transmission can speed up the transmission.

In step S313, the data receiving apparatus combines the data to be transmitted according to a sending port number.

After the data receiving apparatus adds the data to be transmitted to at least one transmission channel for transmission, the data receiving apparatus combines the data to be transmitted according to the sending port number.

In embodiments of the present invention, the flexe_rx_adapter module selects data to be transmitted with a same port according to the sending port number corresponding to the valid timeslot, and then performs data splicing. The spliced data to be transmitted are combined into one path of time-divisional data.

In step S314, the data receiving apparatus encapsulates the combined data to be transmitted according to a transmission mode.

After the data receiving apparatus combines the data to be transmitted, the data receiving apparatus encapsulates the combined data to be transmitted according to the transmission mode.

In embodiments of the present invention, the flexe_rx_dat_spt module splits ports of the perceptual mode and the termination mode into two paths for output according to a GROUP. As for the termination mode, the flexe imp module performs data scrambling, IDLE deletion and insertion and time-divisional mapping on the time-divisional data. As for the perceptual mode, the flexe_bgmp module performs data scrambling and time-divisional mapping on the time-divisional data.

In step S315, the data receiving apparatus sends a receiving interface encapsulated data to be transmitted.

After the data receiving apparatus completes encapsulation of the data to be transmitted, the data receiving apparatus sends the receiving interface the encapsulated data to be transmitted.

In embodiments of the present invention, the data receiving apparatus sends the receiving interface the encapsulated data to be transmitted.

It can be understood that after a data transmission apparatus receives from a sending port a data frame to be transmitted, frame header information and first overhead information which are corresponding to the data frame to be transmitted are acquired, then a transmission mode corresponding to the data frame to be transmitted is determined, different processing is performed on the frame header information and the first overhead information according to the transmission mode to obtain data to be transmitted, and the data transmission apparatus transmits the data to be transmitted through transmission of the data to be transmitted. Therefore, the data transmission apparatus can simultaneously transmit the data to be transmitted in different transmission modes, improving the compatibility of FlexE frame transmission.

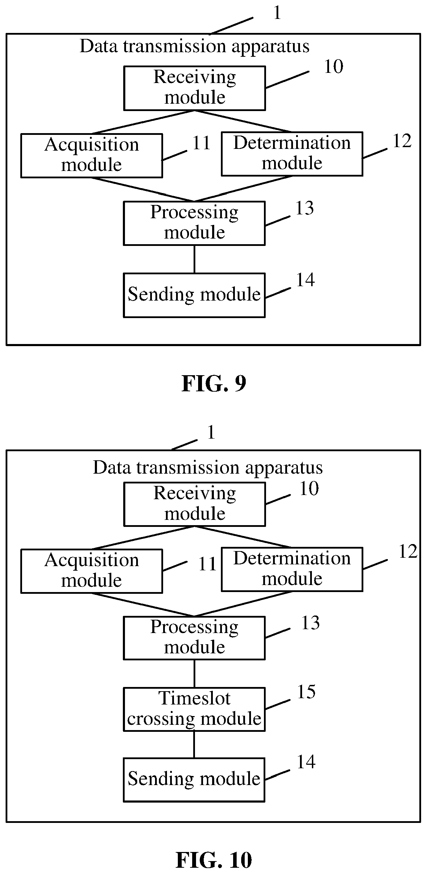

In some embodiments, embodiments of the present invention provide a data transmission apparatus 1. As shown in FIG. 9, the data transmission apparatus 1 may include a receiving module 10, an acquisition module 11 which is connected to the receiving module 10, a processing module 13 which is connected to the acquisition module 11 and a determination module 12, and a sending module 14 which is connected to the processing module 13.

The receiving module 10 is configured to receive from a sending port a data frame to be transmitted and send the acquisition module the data frame to be transmitted.

The acquisition module 11 is configured to acquire frame header information and first overhead information which are corresponding to the data frame to be transmitted, and send the frame header information and the first overhead information to the processing module.

The determination module 12 is configured to determine, according to a preset transmission indication, a first transmission mode corresponding to the data frame to be transmitted, and send the first transmission mode to the processing module.

The processing module 13 is configured to perform corresponding processing on the frame header information and the first overhead information according to the first transmission mode to obtain data to be transmitted corresponding to the data frame to be transmitted, and send the sending module the data to be transmitted.

The sending module 14 is configured to send a receiving interface the data to be transmitted.

In some embodiments, based on FIG. 9, as shown in FIG. 10, the data transmission apparatus further includes a timeslot crossing module 15.

The timeslot crossing module 15 is configured to acquire at least one transmission channel corresponding to the data frame to be transmitted, where the at least one transmission channel is sequenced according to the at least one corresponding transmission channel number; and transmit the data to be transmitted in the at least one transmission channel.

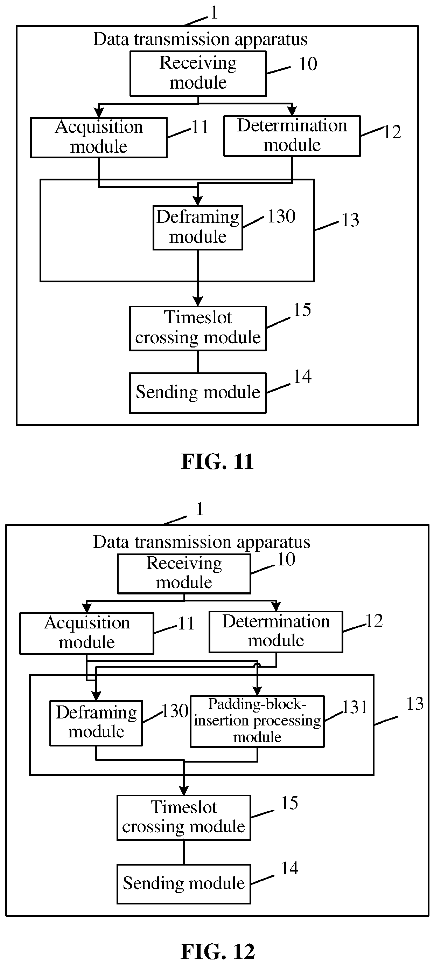

In some embodiments, based on FIG. 10, as shown in FIG. 11, the processing module 13 includes a deframing module 130.

The deframing module 130 is configured to: when the first transmission mode is a termination mode, delete the frame header information and the first overhead information to obtain the data to be transmitted and send the timeslot crossing module the data to be transmitted.

In some embodiments, based on FIG. 11, as shown in FIG. 12, the processing module 13 further includes a padding-block-insertion processing module 131.

The padding-block-insertion processing module 131 is configured to: when the first transmission mode is a perceptual mode, acquire port information corresponding to the data frame to be transmitted from the first overhead information; determine, according to the port information, a valid timeslot corresponding to the data frame to be transmitted; mark the valid timeslot by using the first overhead information; and according to the marked valid timeslot, determine from the data frame to be transmitted the data to be transmitted, and send the timeslot crossing module the data to be transmitted.

In some embodiments, the timeslot crossing module 15 is configured to sequentially acquire at least one first transmission block, at least one second transmission block, until at least one n-th transmission block which are corresponding to the at least one transmission channel, where each transmission channel of the at least one transmission channel includes n transmission blocks, and n is greater than 1; in a sequence of the at least one first transmission block, the at least one second transmission block until the at least one n-th transmission block, sequentially add the data to be transmitted to the at least one transmission channel for transmission, and after the transmission of the data to be transmitted is completed, send a data adapter module the data to be transmitted.

In some embodiments, the padding-block-insertion processing module 131 is further configured to acquire a first data format in the perceptual mode and extend the first data format to a second data format in the termination mode.

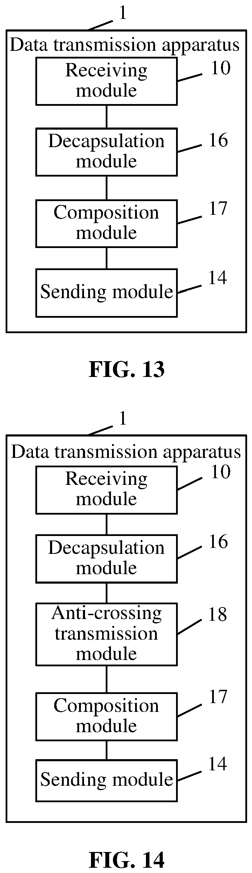

In some embodiments, based on FIG. 9, as shown in FIG. 13, the data transmission apparatus 1 further includes a decapsulation module 16 which is connected to the receiving module 10, and a composition module 17 which is connected to the decapsulation module 16.

The receiving module 10 is further configured to receive from the receiving port the encapsulated data to be transmitted and send the decapsulation module 16 the encapsulated data to be transmitted.

The decapsulation module 16 is configured to decapsulate, according to the first transmission mode, the encapsulated data to be transmitted and sends the composition module 17 the decapsulated data to be transmitted.

The composition module 17 is configured to combine, according to the first transmission mode, the decapsulated data to be transmitted, the frame header information and the first overhead information into the data frame to be transmitted, and send the sending module 14 the data frame to be transmitted.

The sending module 14 is further configured to send the sending port the data frame to be transmitted.

In some embodiments, based on FIG. 13, as shown in FIG. 14, the data transmission apparatus 1 further includes an anti-timeslot-crossing module 18 which is connected to the decapsulation module 16 and the composition module 17.

The anti-timeslot-crossing module 18 is configured to transmit, according to the first transmission mode, the decapsulated data to be transmitted, and after the transmission of the data to be transmitted is completed, send the composition module 17 the data to be transmitted.

In some embodiments, the anti-timeslot-crossing module 18 is configured to: when the first transmission mode is the termination mode, transmit the decapsulated data to be transmitted according to a preset frame length of the data frame to be transmitted.

In some embodiments, the anti-timeslot-crossing module 18 is further configured to: when the first transmission mode is the perceptual mode, transmit the decapsulated data to be transmitted according to the valid timeslot in a transmission clock corresponding to the preset frame length.

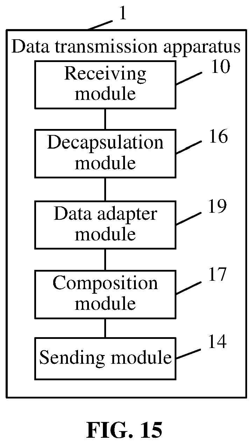

In some embodiments, based on FIG. 14, as shown in FIG. 15, the data transmission apparatus 1 further includes a data adapter module 19 which is connected to the decapsulation module 16 and the anti-timeslot-crossing module 18.

The data adapter module 19 is configured to receive the decapsulated data to be transmitted sent by the decapsulation module 16, and in a sequence of at least one first transmission block, at least one second transmission block, until at least one n-th transmission block, add the decapsulated data to be transmitted to the at least one transmission channel and after the addition of the data to be transmitted is completed, send the anti-timeslot-crossing module 18 the data to be transmitted.

Embodiments of the present invention provide a computer-readable storage medium, which is configured to store a computer program and applied to a data transmission apparatus 1. The computer program, when executed, performs the above-mentioned data transmission methods according to embodiments of the present invention.

A program instruction corresponding to a data transmission method in the present embodiment may be stored in a storage medium. When the computer program instruction in the storage medium and corresponding to the data transmission method is read or executed by an electronic device, steps described below are included.

A data frame to be transmitted is received from a sending port, and frame header information and first overhead information which are corresponding to the data frame to be transmitted are acquired.

A first transmission mode corresponding to the data frame to be transmitted is determined according to a preset transmission indication.

Corresponding processing is performed on the frame header information and the first overhead information according to the first transmission mode to obtain data to be transmitted corresponding to the data frame to be transmitted.

The data to be transmitted is sent to a receiving interface.

It should be understood by those skilled in the art that embodiments of the present invention may be provided as methods, systems or computer program products. Therefore, the present invention may be embodied in the form of a hardware embodiment, a software embodiment, or a combination of hardware and software embodiments. In addition, the present invention may be embodied in the form of a computer program product implemented on one or more computer-usable storage media (including, but not limited to, a disk memory, an optical memory and the like) which include computer-usable program codes.

The present invention is described with reference to flowcharts and/or block diagrams of methods, devices (apparatuses) and computer program products according to embodiments of the present invention. It should be understood that computer program instructions may implement each flow and/or block in the flowcharts and/or the block diagrams and a combination of flows and/or blocks in the flowcharts and/or the block diagrams. These computer program instructions may be provided for a general-purpose computer, a special-purpose computer, an embedded processor or a processor of another programmable data processing device to produce a machine so that instructions executed by the computer or the processor of another programmable data processing device produce a means for implementing functions designated in one or more flows in the flowcharts and/or one or more blocks in the block diagrams.

These computer program instructions may also be stored in a computer-readable memory which can cause the computer or another programmable data processing device to operate in a particular manner so that the instructions stored in the computer-readable memory produce a manufactured product including an instructing apparatus. The instructing apparatus implements the functions designated in the one or more flows in the flowcharts and/or the one or more blocks in the block diagrams.

These computer program instructions may also be loaded onto the computer or another programmable data processing device so that a series of operation steps are performed on the computer or another programmable device to produce processing implemented by the computer. Therefore, instructions executed on the computer or another programmable device provide steps for implementing the functions designated in the one or more flows in the flowcharts and/or the one or more blocks in the block diagrams.

The above are merely preferred embodiments of the present invention and are not intended to limit the scope of the present invention.

## Claims

1. A data transmission method, comprising:
receiving from a sending port a data frame to be transmitted, and acquiring frame header information and first overhead information which are corresponding to the data frame to be transmitted;
determining, according to a preset transmission indication, a first transmission mode corresponding to the data frame to be transmitted;
performing corresponding processing on the frame header information and the first overhead information according to the first transmission mode to obtain data to be transmitted corresponding to the data frame to be transmitted; and
sending a receiving interface the data to be transmitted.

2. The method of claim 1, wherein the first transmission mode comprises a termination mode, and performing the corresponding processing on the frame header information and the first overhead information according to the first transmission mode to obtain the data to be transmitted corresponding to the data frame to be transmitted comprises:
in response to determining that the first transmission mode is the termination mode, deleting the frame header information and the first overhead information to obtain the data to be transmitted.

3. The method of claim 1 or 2, wherein the first transmission mode comprises a perceptual mode, and performing the corresponding processing on the frame header information and the first overhead information according to the first transmission mode to obtain the data to be transmitted corresponding to the data frame to be transmitted comprises:
in response to determining that the first transmission mode is the perceptual mode, acquiring port information corresponding to the data frame to be transmitted from the first overhead information;
determining, according to the port information, a valid timeslot corresponding to the data frame to be transmitted;
marking the valid timeslot by using the first overhead information; and
according to the marked valid timeslot, determining from the data frame to be transmitted the data to be transmitted.

4. The method of claim 1, wherein before sending the receiving interface the data to be transmitted, the method comprises:
acquiring at least one transmission channel corresponding to the data frame to be transmitted; and
transmitting the data to be transmitted in the at least one transmission channel.

5. The method of claim 4, wherein transmitting the data to be transmitted in the at least one transmission channel comprises:
sequentially acquiring at least one first transmission block, at least one second transmission block, until at least one n-th transmission block which are corresponding to the at least one transmission channel, wherein each transmission channel of the at least one transmission channel comprises n transmission blocks, and n is greater than 1; and
in sequence of the at least one first transmission block, the at least one second transmission block, until the at least one n-th transmission block, sequentially adding the data to be transmitted to the at least one transmission channel for transmission.

6. The method of claim 2 or 3, wherein before acquiring port information corresponding to a transmission channel group from the first overhead information, the method further comprises:
acquiring a first data format in the perceptual mode; and
extending the first data format to a second data format in the termination mode.

7. The method of claim 1, wherein after sending the receiving port the data to be transmitted, the method further comprises:
receiving from the receiving port the data to be transmitted, and decapsulating the data to be transmitted according to the first transmission mode; and
combining, according to the first transmission mode, the decapsulated data to be transmitted, the frame header information and the first overhead information into the data frame to be transmitted, and sending the sending port the data frame to be transmitted.

8. The method of claim 7, wherein after decapsulating the data to be transmitted and before combing, according to the first transmission mode, the decapsulated data to be transmitted, the frame header information and the first overhead information into the data frame to be transmitted, the method further comprises:
transmitting, according to the first transmission mode, the decapsulated data to be transmitted.

9. The method of claim 2, wherein transmitting, according to the first transmission mode, decapsulated data to be transmitted comprises:
in response to determining that the first transmission mode is the termination mode, transmitting, according to a preset frame length of the data frame to be transmitted, the decapsulated data to be transmitted.

10. The method of claim 3, wherein transmitting, according to the first transmission mode, decapsulated data to be transmitted comprises:
in response to determining that the first transmission mode is the perceptual mode, transmitting the decapsulated data to be transmitted according to the valid timeslot in a transmission clock corresponding to a preset frame length.

11. The method of claim 4, wherein after decapsulating the data to be transmitted and before transmitting, according to the first transmission mode, the decapsulated data to be transmitted, the method further comprises:
in sequence of at least one first transmission block, at least one second transmission block, until at least one n-th transmission block, adding the decapsulated data to be transmitted to the at least one transmission channel.

12. A data transmission apparatus comprising:
a receiving module;
an acquisition module which is connected to the receiving module;
a processing module which is connected to the acquisition module and a determination module; and
a sending module which is connected to the processing module; wherein
the receiving module is configured to receive from a sending port a data frame to be transmitted and send the acquisition module the data frame to be transmitted;
the acquisition module is configured to acquire frame header information and first overhead information which are corresponding to the data frame to be transmitted, and send the frame header information and the first overhead information to the processing module;
the determination module is configured to determine, according to a preset transmission indication, a first transmission mode corresponding to the data frame to be transmitted, and send the first transmission mode to the processing module;
the processing module is configured to perform corresponding processing on the frame header information and the first overhead information according to the first transmission mode to obtain data to be transmitted corresponding to the data frame to be transmitted, and send the sending module the data to be transmitted; and
the sending module is configured to send a receiving interface the data to be transmitted.

13. The data transmission apparatus of claim 12, comprising a timeslot crossing module which is connected to the processing module and the sending module;
wherein the timeslot crossing module is configured to acquire at least one transmission channel corresponding to the data frame to be transmitted and transmit the data to be transmitted in the at least one transmission channel.

14. The data transmission apparatus of claim 13, wherein the processing module comprises a deframing module; and
the deframing module is configured to: in response to determining that the first transmission mode is a termination mode, delete the frame header information and the first overhead information to obtain the data to be transmitted and send the timeslot crossing module the data to be transmitted.

15. The data transmission apparatus of claim 13 or 14, wherein the processing module further comprises a padding-block-insertion processing module;
the padding-block-insertion processing module is configured to: in response to determining that the first transmission mode is a perceptual mode, acquire port information corresponding to the data frame to be transmitted from the first overhead information; determine, according to the port information, a valid timeslot corresponding to the data frame to be transmitted; mark the valid timeslot by using the first overhead information; and according to the marked valid timeslot, determine from the data frame to be transmitted the data to be transmitted, and send the timeslot crossing module the data to be transmitted.

16. The data transmission apparatus of claim 13, wherein
the timeslot crossing module is configured to sequentially acquire at least one first transmission block, at least one second transmission block, until at least one n-th transmission block which are corresponding to the at least one transmission channel, wherein each transmission channel of the at least one transmission channel comprises n transmission blocks, and n is greater than 1; and in a sequence of the at least one first transmission block, the at least one second transmission block, until the at least one n-th transmission block, sequentially add the data to be transmitted to the at least one transmission channel for transmission, and after the transmission of the data to be transmitted is completed, send the sending module the data to be transmitted.

17. The data transmission apparatus of claim 15, wherein
the padding-block-insertion processing module is further configured to acquire a first data format in the perceptual mode and extend the first data format to a second data format in the termination mode.

18. The data transmission apparatus of claim 12, further comprising a decapsulation module which is connected to the receiving module and a composition module which is connected to the decapsulation module;
wherein the receiving module is further configured to receive from the receiving port the data to be transmitted and send the decapsulation module the data to be transmitted;
wherein the decapsulation module is configured to decapsulate, according to the first transmission mode, the data to be transmitted and send the composition module the data to be transmitted;
wherein the composition module is configured to combine, according to the first transmission mode, the decapsulated data to be transmitted, the frame header information and the first overhead information into the data frame to be transmitted, and send the sending module the data frame to be transmitted; and
wherein the sending module is further configured to send the sending port the data frame to be transmitted.

19. The data transmission apparatus of claim 18, further comprising an anti-timeslot-crossing module which is connected to the decapsulation module and the composition module;
wherein the anti-timeslot-crossing module is configured to transmit, according to the first transmission mode, the decapsulated data to be transmitted, and after the transmission of the data to be transmitted is completed, send the composition module the data to be transmitted.

20. The data transmission apparatus of claim 14 or 19, wherein
the anti-timeslot-crossing module is configured to: in response to determining that the first transmission mode is the termination mode, transmit, according to a preset frame length of the data frame to be transmitted, the decapsulated data to be transmitted.

21. The data transmission apparatus of claim 15 or 20, wherein
the anti-timeslot-crossing module is further configured to: in response to determining that the first transmission mode is the perceptual mode, transmit, according to the valid timeslot in a transmission clock corresponding to the preset frame length, the decapsulated data to be transmitted.

22. The data transmission apparatus of claim 13 or 19, further comprising a data adapter module which is connected to the decapsulation module and the anti-timeslot-crossing module;
wherein the data adapter module is configured to receive the decapsulated data to be transmitted sent by the decapsulation module, and in a sequence of at least one first transmission block, at least one second transmission block, until at least one n-th transmission block, add the decapsulated data to be transmitted to the at least one transmission channel and after the addition of the data to be transmitted is completed, send the anti-timeslot-crossing module the data to be transmitted.

23. A data transmission apparatus, comprising:
a memory which is configured to store a program for data transmission; and
a processor which is configured to execute the program which, when executed, performs the data transmission method of any one of claims 1 to 11.

24. A storage medium which is configured to store a computer program and be applied to a data transmission apparatus, wherein the computer program, when executed by a processor, performs the data transmission method of any one of claims 1 to 11.
